# EUROPÄISCHE PATENTANMELDUNG

(11) **EP 4 064 482 A1**
(43) Veröffentlichungstag der Anmeldung: **28.09.2022**
(21) Anmeldenummer: 22164540.1
(22) Anmeldetag: 25.03.2022
(51) Int. Cl.: H02G 3/04, H02G 3/12

(54) **MULTIFUNKTIONSKANAL**

(30) Priorität: 25.03.2021 CH 3202021
(71) Anmelder: Bori, Raymond, 8320 Fehraltorf (CH)
(72) Erfinder: Bori, Raymond, 8320 Fehraltorf (CH)
(74) Vertreter: Frei Patent Attorneys

(57) **Zusammenfassung**

Multifunktionskanal (1) für Haustechnik, umfassend einen Kanalboden (2) und ein Oberteil (3a,3b). Der Kanalboden (2) ist für eine Befestigung einer Installationskomponente (10) ausgebildet ist, welche in einem Betriebszustand des Multifunktionskanals (1) vom am Kanalboden (2) befestigten Oberteil (3a,3b) verdeckt ist. Das Oberteil (3a) umfasst mindestens in einem Teilbereich des Multifunktionskanals (1) einen Einbaukanal (4), wobei der Einbaukanal (4) für eine Befestigung einer von ausserhalb des Multifunktionskanals (1) zugänglichen Installationskomponente (10) ausgebildet ist, Der Einbaukanal (4) ist vom Oberteil (3a) in den Multifunktionskanal (1) hineinragend ausgebildet. Der Kanalboden (2) und/oder der Einbaukanal (4) können eine Geräteschiene (11,12) umfassen. Der Multifunktionskanal (1) kann auch eine vom Kanalboden (2) und vom Oberteil (3a,3b) separat ausgebildete Einbauschiene (5) umfassen, welche am Kanalboden (2) und insbesondere an der Geräteschiene (11,12) am Kanalboden (2) befestigt werden kann.

## Beschreibung

Die Erfindung bezieht sich auf das Gebiet von Kanälen für Haustechnik, insbesondere von Kanälen für Elektroinstallationen. Sie bezieht sich auf einen Kanal gemäss dem Oberbegriff des unabhängigen Patentanspruchs 1.

Kanäle für Haustechnik sind weit verbreitet und bestehen bereits in vielen verschiedenen Varianten.

Die bekannten Kanäle für Haustechnik sind für die Verlegung von Kabeln ausgelegt. Oder die bekannten Kanäle sind für den Einbau von Bedienungskomponenten ausgelegt, welche von ausserhalb des Kanals zugänglich sind. Oder die bekannten Kanäle sind für einen Einbau von Komponenten ausgebildet, welche vom Kanal abgedeckt werden. Dabei sind die bekannten Kanäle für spezifische Anwendungen vorgesehen. Häufig sind die bekannten Kanäle für spezifische Normen (Baunormen, Normen und Vorschriften für Elektroinstallationen) ausgelegt. Eine geringe räumliche Grösse der bekannten Kanäle wird angestrebt, um den Platzverbrauch und den Aufwand der Installation der Kanäle gering zu halten. Entsprechend spezifisch sind die bekannten Kanäle ausgebildet.

In den bekannten Kanälen ist eine Installation ausserhalb der spezifischen Anwendung, für welche ein bekannter Kanal ausgelegt ist, nur mit aufwändigen Anpassungen möglich.

Beispielsweise werden verdeckt eingebaute Komponenten räumlich getrennt und unterschiedlich von dazugehörigen, von ausserhalb eines Kanals zugänglichen Bedienungskomponenten installiert. Etwa einerseits verdeckt eingebaute Komponenten in einer Hohldecke und andererseits räumlich davon getrennt angeordnete dazugehörige Bedienungskomponenten mit normierten Ausmassen in einem für diese normierten Ausmasse ausgelegten Kabelkanal, welcher eine Bedienung der Bedienungselemente erlaubt und für diese Anwendung ausgebildet ist. Eine solche Installation ist zeit- und arbeitsaufwendig in Installation, Wartung und Reparatur. Insbesondere ist der Einbau von Komponenten in eine Hohldecke aufwendig, weil die Decke dafür meistens grossflächig geöffnet werden muss. Zudem umfassen Hohldecken meistens bereits schon viele andere Elemente wie Leitungen und Komponenten von Heiz- und/oder Kühlvorrichtungen, Wasserversorgung, Lüftung und Verkabelungen (Kabeltrassen, Kabel etc.). An bzw. in der Hohldecke sind darüber hinaus meistens auch weitere Elemente befestigt wie etwa Beleuchtungselemente, Sensoren (Bewegungsmelder, Rauch-/Feuermelder etc.), Beschilderungen (z.B. für Notausgänge), Lautsprecher, Lüftungsöffnungen und dergleichen. Bei einem Einbau von Komponenten in eine Hohldecke muss auf alle diese Elemente Rücksicht genommen werden. Zum erneuten Finden der eingebauten Komponenten müssen schlussendlich auch noch entsprechende Markierungen an unbeweglichen (ortsfesten und nicht demontierbaren) Teilen der Hohldecke vorgenommen werden.

Oder alle Komponenten werden in einem Schrank oder Kasten installiert, was viel Platz benötigt, innerhalb eines Raumes die Bewegungsfreiheit und Möblierungsfreiheit einschränkt und unästhetisch wirkt. Auch die Verwendung einer Kombination von unterschiedlichen Kanalsystemen für jeweils die spezifische Anforderung der einzelnen Komponenten ist bekannt. Auch eine solche Installation ist zeit- und arbeitsaufwendig in Installation, Wartung und Reparatur. Hinzu kommt eine Verwendung einer Vielzahl von unterschiedlichen Komponenten, was kostenintensiv und aufwändig in Produktion, Lagerung, Transport, Installation, Wartung und Reparatur ist.

Es ist deshalb Aufgabe der Erfindung, einen Kanal für Haustechnik zu schaffen, welcher mindestens einen der oben genannten Nachteile mindestens teilweise behebt.

Diese Aufgabe löst ein Multifunktionskanal mit den Merkmalen des unabhängigen Patentanspruchs 1. Weitere Ausführungen können den abhängigen Ansprüchen, der Beschreibung und/oder den Figuren entnommen werden.

Der erfindungsgemässe Multifunktionskanal für Haustechnik umfasst einen Kanalboden und ein Oberteil. Dabei ist der Kanalboden für eine Befestigung einer Installationskomponente ausgebildet, welche in einem Betriebszustand des Multifunktionskanals vom am Kanalboden befestigten Oberteil verdeckt ist. Das Oberteil umfasst mindestens in einem Teilbereich des Multifunktionskanals einen Einbaukanal. Der Einbaukanal ist für eine Befestigung einer Installationskomponenten ausgebildet, welche von ausserhalb des Multifunktionskanals zugänglichen ist. Der Einbaukanal ist dabei vom Oberteil in den Multifunktionskanal hineinragend ausgebildet.

Der Kanalboden und das Oberteil bilden im zusammengebauten Zustand, also im Betriebszustand des Multifunktionskanal, zwischen Kanalboden und Oberteil einen Hohlraum im Multifunktionskanal aus.

Der Kanalboden kann im Wesentlichen U-förmig ausgebildet sein. Das Oberteil kann als Deckel für einen im Wesentlichen U-förmig ausgebildeten Kanalboden ausgebildet sein.

Das Oberteil umfasst mindestens in einem Bereich einen Einbaukanal, welcher in den Multifunktionskanal hineinragt. Anders gesagt erstreckt sich der Einbaukanal vom Oberteil in Richtung Kanalboden. Der Einbaukanal ist also eine Vertiefung im Oberteil. Ist der Einbaukanal ausgefüllt, bildet das Oberteil im Wesentlichen eine ebene Fläche als Aussenfläche des Multifunktionskanals.

Optional ist das Oberteil einteilig ausgebildet und umfasst im Betriebszustand des Multifunktionskanal entlang der Längsachse des Multifunktionskanals sowohl einen Bereich mit Einbaukanal als auch einen Bereich frei von einem Einbaukanal.

Optional ist das Oberteil mehrteilig ausgebildet, wobei ein Teil des Oberteils einen Einbaukanal aufweist und ein anderer Teil des Oberteils frei von einem Einbaukanal ist.

Das Oberteil kann dadurch eine gegen eine Bedienungsseite des Multifunktionskanals hin geöffnete Einbaukanalöffnung bilden.

Die Bedienungsseite des Multifunktionskanals ist entlang einer Längsachse des Multifunktionskanals angeordnet.

Die verdeckte Installationskomponente ist im Hohlraum des Multifunktionskanals installiert, sodass sie von Kanalboden und Oberteil in einer Ebene quer zu einer Längsachse des Multifunktionskanals umschlossen ist. Mit anderen Worten deckt das Oberteil die verdeckte Installationskomponente ab, welche am Kanalboden befestigt ist.

Insbesondere ist mit "das Oberteil verdeckt die am Kanalboden befestigte Installationskomponente" gemeint, dass bei entferntem Oberteil ein direkter Zugriff auf die am Kanalboden befestigte Installationskomponente möglich ist.

Die verdeckte Installationskomponente kann an einem Boden des Kanalbodens befestigt sein.

Mit Boden des Kanalbodens wird ein dem am Multifunktionskanal montierten Oberteil gegenüberliegender Bereich des Kanalbodens bezeichnet.

Die verdeckte Installationskomponente kann ein Einbaugerät sein. An der verdeckten Installationskomponente selber ist typischerweise nur selten oder gar nicht eine Bedienung, Manipulation und/oder Ein- bzw. Ausgabe nötig oder angebracht. Beispielsweise ist die verdeckte Installationskomponente ein Transformator, eine Steuerungs- oder Regelungseinheit, ein Signalverstärker, eine Kommunikationsverzweigung, eine Hausautomationskomponente oder eine Informationsverarbeitungseinheit.

Optional ist die von aussen zugängliche Installationskomponente direkt im Einbaukanal befestigt. Dies erspart weitere Komponenten und erlaubt eine einfache, robuste und kostengünstige Bauweise. Entsprechend sind auch eine kostengünstige Produktion, Installation und Wartung bzw. Reparatur des Multifunktionskanals und/oder ein kostengünstiger Ersatz von Komponenten im Multifunktionskanal möglich.

Optional ist auch die verdeckte Installationskomponente direkt befestigt (am Kanalboden), mit den entsprechenden oben beschriebenen Vorteilen.

Die von aussen zugängliche Installationskomponente ist insbesondere von der Bedienungsseite zugänglich.

Zugänglich heisst nicht abgedeckt vom Oberteil.

Die von aussen zugängliche Installationskomponente weist beispielsweise ein Bedienelement (etwa ein Schalter, Taster, Regler, Touchscreen), einen Sensor (etwa für Temperatur oder Luftqualität), einen Anschluss (etwa für Strom, Netzwerk, Telekommunikation) und/oder eine Mitteilungsvorrichtung (etwa ein Bildschirm, Lautsprecher, andere optische und/oder akustische Vorrichtungen) auf.

Beispielsweise kann die Installationskomponente unter anderem ein Feldgerät sein.

Die Installationskomponente unterscheidet sich von einem Kabel dadurch, dass die Installationskomponente mehr Platz benötigt als ein Kabel. Dies gilt sowohl für verdeckte als auch für von aussen zugängliche Installationskomponenten. Dadurch kann eine Installationskomponente nur in entsprechend grossen Kanälen installiert werden, nicht aber in engen Kabelkanälen und/oder Kanalunterteilungen, die einer Trennung und Ordnung von Kabeln dienen.

Beispielsweise ist eine Installationskomponente mindestens 5 cm hoch und mindestens 5 cm breit. Die Installationskomponente kann auch mindestens 7.5 cm hoch und mindestens 10 cm breit sei. Insbesondere ist die Installationskomponente mindestens 10 cm hoch und mindestens 13 cm breit.

Höhe bedeutet im Rahmen dieser Patentanmeldung eine räumliche Ausdehnung senkrecht zur Längsachse des Multifunktionskanals, welche vom Oberteil des Multifunktionskanals in Richtung Kanalboden weist. Breite ist eine räumliche Ausdehnung senkrecht zur Höhe und senkrecht zur Längsachse des Multifunktionskanals. Anders ausgedrückt werden Höhe und Breite in einer Ebene quer zur Längsachse des Multifunktionskanals gemessen, also in einem Querschnitt des Multifunktionskanals und somit in einer Ebene senkrecht zur Längsachse des Multifunktionskanals.

Umfasst der Multifunktionskanal eine Geräteschiene, und ist die Geräteschiene am Boden des Kanalbodens angeordnet, dann wird die Höhe einer Installationskomponente gemessen in einer Richtung zwischen Oberteil und Geräteschiene.

Der Multifunktionskanal kann flexibel und vielseitig verwendet werden. Im gleichen Multifunktionskanal können verdeckte (zwischen Kanalboden und Oberteil) und von aussen zugängliche Installationskomponenten (im Einbaukanal) verbaut werden. Dies vereinfacht und beschleunigt Installation, Wartung und Reparatur.

Insbesondere können im gleichen Querschnitt des Multifunktionskanals (also quer zur Längsachse des Multifunktionskanals) gleichzeitig sowohl am Kanalboden als auch am Oberteil Installationskomponenten befestigt sein.

Die am Kanalboden befestigte Installationskomponente kann unter der im Oberteil befestigten Installationskomponente liegen. Anders ausgedrückt kann mit dem Montieren des Oberteils auf den Kanalboden die im Oberteil befestigte Installationskomponente über der am Kanalboden befestigten Installationskomponente angeordnet werden.

Durch die vielseitige Verwendung des Multifunktionskanals kann eine grosse Anzahl von Anwendungen mit einer einfachen Konstruktion mit wenigen Komponenten abgedeckt werden. Dies ist ein Vorteil bei Preis und Geschwindigkeit in Produktion, Lagerung und Transport.

Verdeckte und zugängliche Installationskomponenten können nach Funktionen gruppiert installiert werden, was Fehlersuche, Wartung, Reparatur und auch Installation vereinfachen kann.

Sind verdeckte Installationskomponenten im Multifunktionskanal anstatt beispielsweise in einer Hohldecke (und/oder Wand oder Boden) verbaut, sind diese verdeckten Installationskomponenten einfach zugänglich mit allen entsprechenden Vorteilen.

Mit anderen Worten ist die Installationskomponente sicher und gut erreichbar, wenn sie im Multifunktionskanal befestigt ist. Bei einer Befestigung beispielsweise in einer Hohldecke ist eine Leiter nötig, um die Installationskomponente zu erreichen. Dies fällt beim Multifunktionskanal weg.

Der Multifunktionskanal bietet in Abschnitten mit Oberteil ohne Einbaukanal Platz für grosse Installationskomponenten. In Abschnitten mit Einbaukanal können kleine Installationskomponenten von aussen zugänglich installiert werden. Der Multifunktionskanal weist aber in allen Abschnitten im Wesentlichen dieselben Aussenmasse auf, was beispielsweise Planung und Einbau erleichtert.

Ist der Multifunktionskanal mit Boden und/oder Decke verbindbar angeordnet, bietet der Multifunktionskanal genug Platz für ein einfaches, effizientes und materialschonendes Einführen und Verlegen von Leitungen aus dem Boden und/oder der Decke heraus in den Multifunktionskanal (bzw. umgekehrt vom Multifunktionskanal in diese hinein).

Ist der Multifunktionskanal gleichzeitig mit Boden und Decke verbindbar angeordnet, kann dadurch im Multifunktionskanal ein den Boden und die Decke verbindender und für Hausinstallationen nutzbarer Hohlraum ausgebildet werden.

Insbesondere kann ein in Längsrichtung im Wesentlichen vertikal angeordneter Multifunktionskanal durch seine innere Struktur und sein inneres Raumangebot eine Art thermischen Kamineffekt bewirken, was vorteilhaft für eine Kühlung von Installationskomponenten und anderen Elementen im Multifunktionskanal genutzt werden kann.

Durch die variable Ausgestaltung des Multifunktionskanals mit auf den Anwendungszweck gezielt anpassbarer Platzausnutzung (Teilbereiche mit und/oder ohne Einbaukanal) ist ein einmal installierter Multifunktionskanal vorteilhaft für eine Erstinstallation von Installationskomponenten sowie der dazugehörigen Elemente wie Kabel und andere Verbindungen. Aber auch für Wartung, Reparatur und Ersatz der Installationskomponenten etc. ist der Multifunktionskanal vorteilhaft. Darüber hinaus ist der Multifunktionskanal auch bei Auf- bzw. Nachrüstungen (nachträglichen Installationen) vorteilhaft.

Optional kann der Multifunktionskanal mit seiner Längsachse parallel zur Gravitationsrichtung angeordnet werden. Anders ausgedrückt kann der Multifunktionskanal vertikal verbaut sein. Insbesondere ist der Multifunktionskanal vertikal angeordnet an einer Wand befestigt.

Die vertikale Anordnung des Multifunktionskanals erlaubt eine ergonomische und gut zugängliche Installation von zugänglichen und verdeckten Installationskomponenten. Die vertikale Anordnung ist platzsparend.

Optional weist der Multifunktionskanal an einer bzw. beiden Stirnseiten Verbindungsöffnungen zur Verbindung des Multifunktionskanals mit Decke und/oder Boden auf. Dadurch kann der Hohlraum im Multifunktionskanal mit weiteren Hohlräumen verbunden werden. Das erlaubt eine einfache und platzsparende Verbindung des Multifunktionskanals an nötige Anschlüsse, Kanäle und/oder Kabel.

Alternativ kann der Multifunktionskanal horizontal oder schräg angeordnet sein.

Optional umfasst der Kanalboden eine Geräteschiene.

Eine Geräteschiene ist eine Vorrichtung zum Befestigen von Geräten bzw. Installationskomponenten. Die Geräteschiene kann einer Norm bzw. einem Standard oder eine üblichen Ausbildung eines bekannten Herstellers entsprechen.

Insbesondere ist die Geräteschiene mindestens 1 cm breit. Die Geräteschiene kann mindestens 2 cm breit sein. Beispielsweise ist die Geräteschiene mindestens 3 cm breit.

Die Geräteschiene kann aus dem Kanalboden in Richtung Oberteil heraustreten. Und/oder die Geräteschiene kann als Vertiefung im Kanalboden ausgebildet sein. Insbesondere ist eine Längsachse der Geräteschiene parallel zur Längsachse des Multifunktionskanals angeordnet.

Die Geräteschiene kann am Boden des Kanalbodens befestigt sein.

Die Geräteschiene vereinfacht und beschleunigt Installation, Wartung und Reparatur der Installationskomponente.

Alternativ kann der Kanalboden ohne Geräteschiene ausgebildet sein.

Optional umfasst der Einbaukanal eine Geräteschiene.

Die Merkmale und Vorteile der Geräteschiene sind oben beschrieben. Alternativ kann der Einbaukanal ohne Geräteschiene ausgebildet sein.

Optional verläuft der Einbaukanal im Teilbereich des Multifunktionskanals entlang einer Längsachse des Multifunktionskanals.

Anders ausgedrückt verläuft in diesem Fall die Längsachse des Einbaukanals parallel zur Längsachse des Multifunktionskanals. Auf diese Weise kann sich der Einbaukanal entlang des Multifunktionskanals mehr oder weniger weit erstrecken. Alternativ kann der Einbaukanal schräg oder quer zum Multifunktionskanal angeordnet sein.

Optional umfasst der Multifunktionskanal eine Abdeckung für den Einbaukanal.

Die Abdeckung kann den Einbaukanal in Bereichen verschliessen, wo keine von aussen zugängliche Installationskomponenten im Einbaukanal verbaut ist. Das heisst, der Einbaukanal kann mit der Abdeckung verschlossen werden. Insbesondere bildet die Abdeckung im Betriebszustand des Multifunktionskanals mit dem Oberteil eine ebene Aussenfläche des Multifunktionskanals aus.

Optional umfasst der Multifunktionskanal eine vom Kanalboden und vom Oberteil separat ausgebildete Einbauschiene, welche am Kanalboden und insbesondere an der Geräteschiene am Kanalboden befestigt werden kann.

Eine Einbauschiene kann ausserhalb des Multifunktionskanals vorgefertigt bzw. vorkonfiguriert werden und danach am Kanalboden befestigt werden. Dies vereinfacht und beschleunigt die Installation, Wartung und Reparatur der verdeckten Installationskomponenten.

Insbesondere ist die Einbauschiene mindestens 5 cm breit. Die Geräteschiene kann mindestens 7.5 cm breit sein. Beispielsweise ist die Geräteschiene mindestens 10 cm breit.

Die Einbauschiene hat den Vorteil, dass einzelne Installationskomponenten oder Gruppen davon an der Einbauschiene zeitlich und/oder räumlich unterschiedlich zum Kanalboden montiert und insbesondere auch schon vorverkabelt bzw. vorverdrahtet werden können.

Beispielsweise ist eine Vorbereitung von mehreren vorkonfigurierten Einbauschienen in einer Werkstatt möglich. Diese werden dann am montierten Kanalboden befestigt. Dies spart Zeit und ist kosteneffizient.

Zudem ist auch ein Ersatz, eine Reparatur und/oder eine Nachrüstung bzw. Modernisierung von Installationskomponenten vereinfacht, indem die Einbauschiene rasch ersetzt werden kann. Auch die Vormontage hilft, Zeit und Geld zu sparen und nötige Unterbrüche kurz zu halten.

Optional ist die Einbauschiene im Wesentlichen L-förmig ausgebildet. Dies hat den Vorteil, dass vor der Befestigung am Kanalboden nicht nur eine Grundplatte der Einbauschiene zur Vorkonfigurierung der Einbauschiene zur Verfügung steht, sondern auch eine Seitenplatte der Einbauschiene.

Alternativ kann die Einbauschiene im Wesentlichen U-förmig oder eben ausgebildet sein. Auch unregelmässige Formen sind denkbar. Die Einbauschiene kann auch abschnittweise unterschiedliche Formen aufweisen.

Alternativ kann der Multifunktionskanal ohne Einbauschiene ausgebildet sein.

Optional umfasst die Einbauschiene eine Geräteschiene.

Die Merkmale und Vorteile der Geräteschiene sind oben beschrieben.

Insbesondere kann die Einbauschiene sowohl eine Geräteschiene aufweisen als auch an der Geräteschiene des Kanalbodens befestigbar ausgebildet sein. Auf diese Weise kann eine an der Geräteschiene befestigbare Installationskomponente auf dieselbe Weise entweder direkt am Kanalboden oder an der Geräteschiene befestigt werden. Auch eine spätere Umkonfigurierung des Multifunktionskanals (Entfernen oder Hinzufügen der Einbauschiene) wird mit wenig Aufwand ermöglicht.

Alternativ kann die Einbauschiene ohne Geräteschiene ausgebildet sein.

Optional umfasst der Multifunktionskanal einen vom Kanalboden und vom Oberteil separat ausgebildeten Verbinder. Der Verbinder ist in Betriebszustand des Multifunktionskanals jeweils kontaktschlüssig und zwischen Kanalboden und Oberteil angeordnet.

Durch den Verbinder zwischen Kanalboden und Oberteil ist der Multifunktionskanal mechanisch verstärkt in Druckrichtung zwischen Kanalboden und Oberteil.

Optional kann der Verbinder zwischen Kanalboden und Oberteil den Multifunktionskanal in Zugrichtung zwischen Kanalboden und Oberteil mechanisch verstärken. Beispielsweise, indem der Verbinder zugfest mit dem Kanalboden und gleichzeitig zugfest mit dem Oberteil verbunden ist.

Die Stabilität des Multifunktionskanals wird durch den Verbinder erhöht. Durch den Verbinder kann der Kabelkanal und/oder das Oberteil bei gleichbleibender mechanischer Stabilität mit weniger Material (dünneren Wänden und/oder Verstrebungen) ausgebildet werden. Dies spart Material, Gewicht und Kosten.

Alternativ kann der Multifunktionskanal frei von Verbindern ausgebildet sein.

Optional ist der Verbinder für zwei verschieden Längen konfigurierbar ausgebildet. Und zwar für eine erste Länge, um zwischen Kanalboden und Oberteil mit Einbaukanal positioniert zu werden. Und für eine zweite Länge, um zwischen Kanalboden und Oberteil ohne Einbaukanal positioniert zu werden.

Auf diese Weise kann derselbe Verbinder sowohl für Oberteile mit Einbaukanal als auch für Oberteile ohne Einbaukanal verwendet werden.

Die Konfigurierbarkeit des Verbinders kann beispielsweise durch eine Sollbruchstelle am Verbinder ausgebildet sein. Der Verbinder kann mehrteilig ausgebildet sein, um konfigurierbar zu sein.

Optional ragt der Einbaukanal in Betriebszustand des Multifunktionskanals mindestens in eine Tiefe von 50% der Tiefe des Multifunktionskanal hineinragt.

Der Einbaukanal ragt also mindestens bis zur Hälfte des Multifunktionskanal in selbigen hinein. Insbesondere ragt der Einbaukanal mindestens in eine Tiefe von 65% der Tiefe des Multifunktionskanal hinein. Beispielsweise ragt der Einbaukanal mindestens in eine Tiefe von 80% der Tiefe des Multifunktionskanal hinein.

Optional ist der Kanalboden auf einer der Bedienungsseite des Multifunktionskanals entgegengesetzten Seite für einen Durchbruch vorgesehen ausgebildet.

Der Durchbruch auf der Rückseite des Multifunktionskanals erlaubt es dem Multifunktionskanal, beispielsweise mit weiteren Installationskomponenten durch eine Wandöffnung hindurch verbunden zu sein.

Somit könnten Installationskomponenten auf beiden Seiten einer Wand mit dem an dieser Wand angeordneten Multifunktionskanal verbunden sein (eine im Multifunktionskanal bzw. im Hohlraum oder im Einbaukanal angeordnete sowie eine auf einer dem Multifunktionskanal gegenüberliegenden Wandseite an der Wand angeordnete Installationskomponente).

Der Kanalboden kann beispielsweise durch Sollbruchstellen, Nuten, Vertiefungen oder Perforation für den Durchbruch vorgesehen ausgebildet sein.

Alternativ kann der Kanalboden frei von einer Vorbereitung für einen optionalen Durchbruch ausgebildet sein. Oder beispielsweise kann der Kanalboden auch einen fertig ausgebildeten Durchbruch umfassen.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1: einen Querschnitt durch einen Multifunktionskanal mit Einbaukanal;
- Figur 2: einen Querschnitt durch ein Oberteil mit Einbaukanal;
- Figur 3: einen Querschnitt durch ein Oberteil frei von einem Einbaukanal;
- Figur 4: einen Querschnitt durch einen Kanalboden;
- Figur 5: einen Querschnitt durch eine Einbauschiene;
- Figur 6: einen Querschnitt durch einen Kanalboden mit daran befestigter Einbauschiene;
- Figur 7: einen Querschnitt durch verschiedene Komponenten eines Multifunktionskanals frei von einem Einbaukanal;
- Figur 8: einen Querschnitt durch verschiedene Komponenten eines Multifunktionskanals mit Einbaukanal;
- Figur 9: eine perspektivische Ansicht eines Multifunktionskanals in Betriebszustand.

Grundsätzlich sind in den Figuren gleiche Teile mit gleichen Bezugszeichen versehen. Mit den Bezeichnungen links, rechts, unten und oben wird auf die Zeichnungsebene der Figuren Bezug genommen.

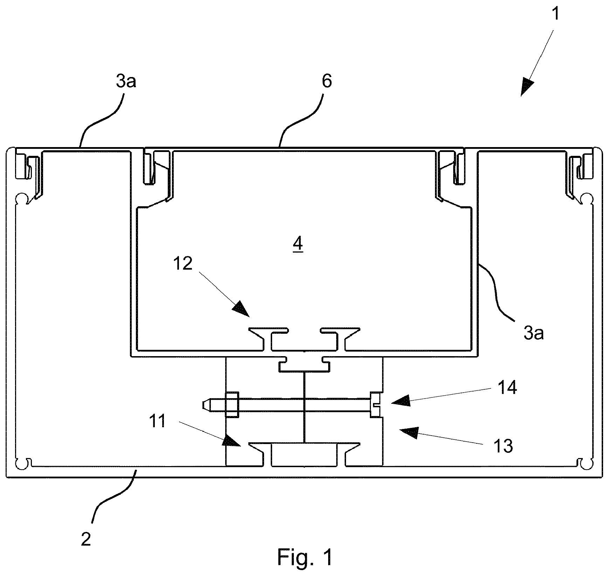

Figur 1 zeigt einen Querschnitt durch einen Multifunktionskanal 1 mit Einbaukanal 4. Der Multifunktionskanal 1 ist in betriebsbereiten Zustand, also zusammengebaut. Im in Figur 1 dargestellten Querschnitt umfasst der Multifunktionskanal den Einbaukanal 4, welcher aber leer (ohne daran befestigte Installationskomponente) ist und mit der Abdeckung 6 abgedeckt ist. Der Multifunktionskanal 1 umfasst einen Kanalboden 2, welcher durch das Oberteil 3a verschlossen ist. Das Oberteil 3a bildet den Einbaukanal 4 aus.

Der Kanalboden 2 weist eine in Richtung Oberteil 3a herausstehende Geräteschiene 11 auf. Hier ist an der Geräteschiene 11 keine Installationskomponente befestigt, sondern ein Verbinder 13. Der Verbinder 13 ist zweiteilig ausgebildet und durch eine Verbinderschraube 14 zusammengehalten. Der Verbinder 13 ist zug- und druckfest mit der Geräteschiene 11 des Kanalbodens 2 verbunden und ebenso zug- und druckfest mit einer Unterseite des Einbaukanals 4 im Oberteil 3a. Der Einbaukanal 4 weist eine in Richtung Abdeckung 6 herausstehende Geräteschiene 12 auf. Die Geräteschiene 12 des Einbaukanals 4 unterscheidet sich leicht von der Geräteschiene 12 des Kanalbodens 2, um andere eine Installation anderer Installationskomponenten zu ermöglichen.

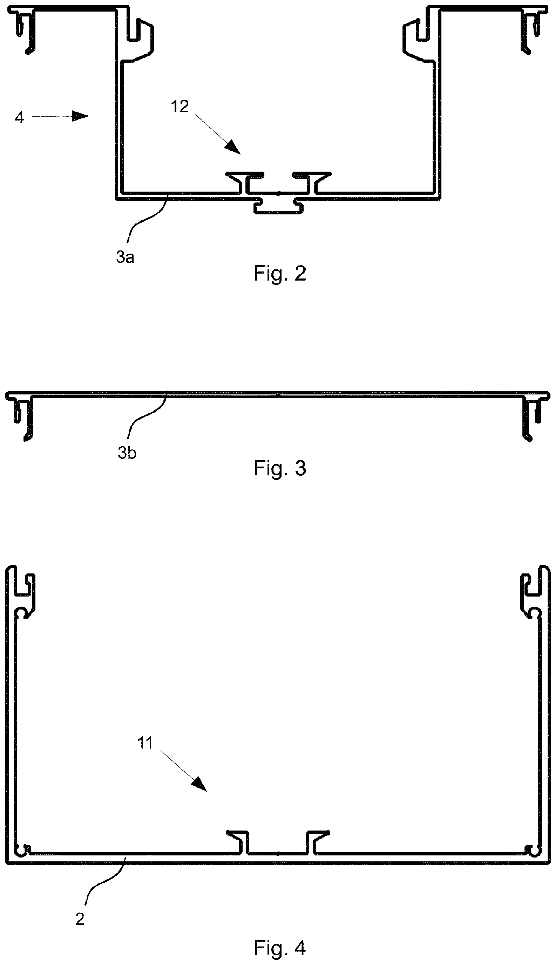

In Figur 2 ist ein Querschnitt durch ein Oberteil 3a mit Einbaukanal 4 dargestellt. Gut zu erkennen ist die mittig im Einbaukanal 4 angeordnete Geräteschiene 12. Das Oberteil 3a weist an seinen seitlichen Enden Befestigungsvorrichtungen für eine Befestigung des Oberteils 3a am Kanalboden 2 auf. Ebenso weist der Einbaukanal 4 an seinen Rändern Befestigungsvorrichtungen für eine Befestigung einer Abdeckung 6 auf.

Figur 3 hingegen zeigt einen Querschnitt durch ein Oberteil 3b, welches frei von einem Einbaukanal 4 ist.

Und Figur 4 zeigt einen Querschnitt durch einen Kanalboden 2. Der Kanalboden 2 ist U-förmig ausgebildet und weist mittig angeordnet die Geräteschiene 11 auf. An den oberen Enden des Kanalbodens sind Befestigungsvorrichtungen für die Befestigung des Oberteils 3a,3b ausgebildet.

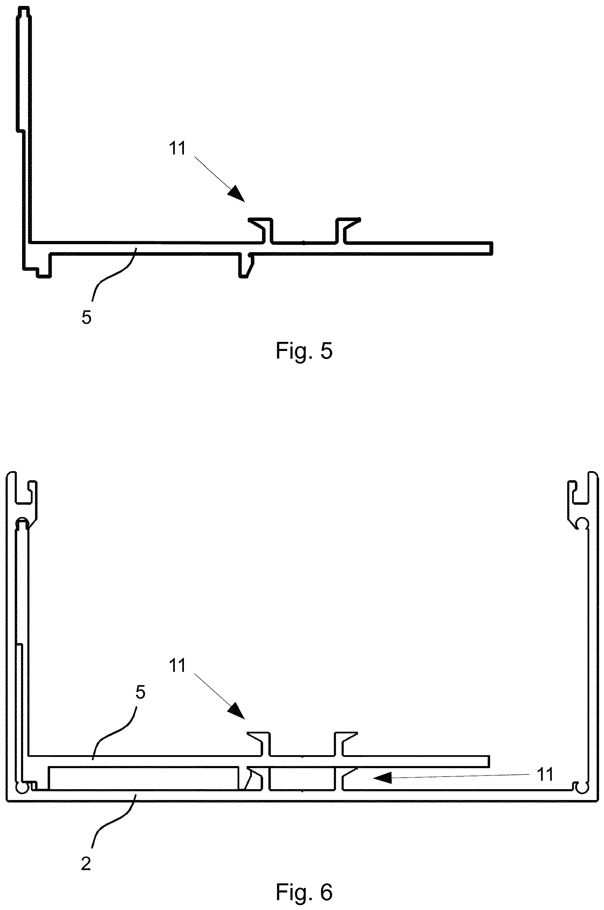

Figur 5 zeigt einen Querschnitt durch eine Einbauschiene 5. In diesem Fall ist die Einbauschiene 5 L-förmig ausgebildet und weist somit eine Grundplatte und eine Seitenplatte auf. Mittig auf der Grundplatte der Einbauschiene 5 ist eine Geräteschiene 11 ausgebildet, welche identisch zur Geräteschiene im Kanalboden 2 ist. Die Einbauschiene 2 erlaubt eine Vorkonfiguration von Installationskomponenten ausserhalb des Multifunktionskanal 1.

In Figur 6 ist ein Querschnitt durch einen Kanalboden 2 mit daran befestigter Einbauschiene 5 dargestellt. Die Einbauschiene 5 ist dabei derart ausgebildet, dass ein oberes Ende der Seitenplatte der Einbauschiene 5 in der Befestigungsvorrichtung am oberen Rand des Kanalbodens 2 eingesetzt werden kann. Und ein aus der Einbauschiene 5 nach unten heraustretendes Element steht in Kontaktschluss mit einem Teil der Geräteschiene 11 des Kanalbodens 2. Auf diese Weise ist die Einbauschiene 5 klemmend am Kanalboden 2 befestigt.

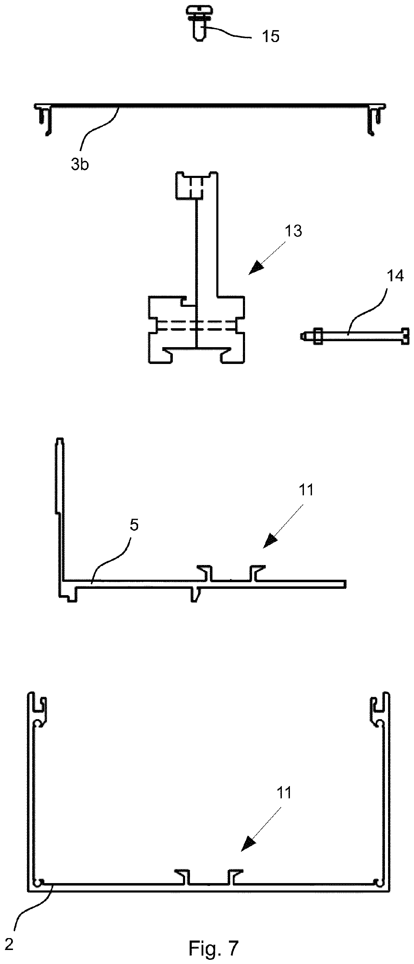

In Figur 7 ist ein Querschnitt durch verschiedene Komponenten eines Multifunktionskanals 1 frei von einem Einbaukanal 4 dargestellt. Kanalboden 2, Einbauschiene 5, Verbinder 13, Oberteil 3b und Oberteilschrauben 15 sind im Stil einer Explosionszeichnung dargestellt. Der Verbinder 13 ist in einer zweiten Länge gezeigt, welche für eine Positionierung zwischen Kanalboden 2 und Oberteil 3b ohne Einbaukanal 4 vorgesehen ist. Die zweite Länge kann auch ein wenig kürzer ausfallen, wenn im Multifunktionskanal 1 die Einbauschiene 5 verwendet wird. Das Oberteil 3b wird mit der Oberteilschraube 15 am oberen Ende des Verbinders 13 befestigt, um eine zug- und druckfeste Verbindung zu erreichen und dadurch den Multifunktionskanal 1 in betriebsbereitem Zustand Stabilität zu verleihen.

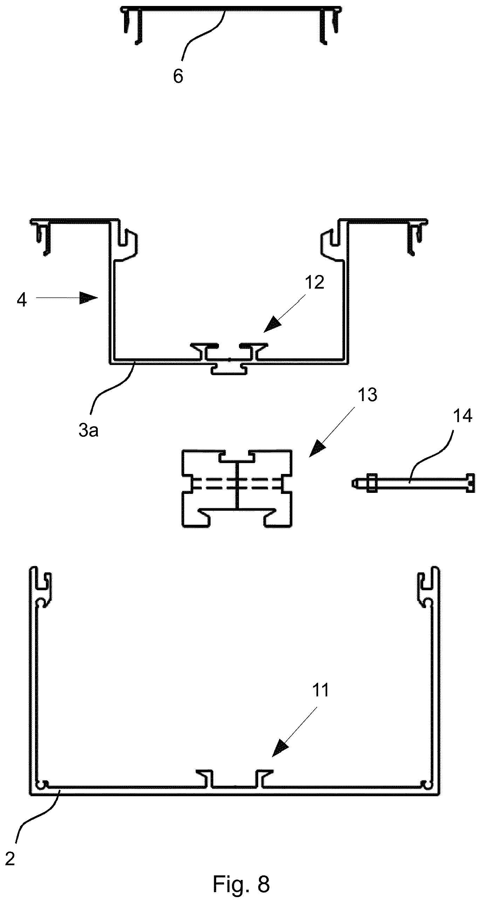

Figur 8 zeigt einen Querschnitt durch verschiedene Komponenten eines Multifunktionskanals 1 mit Einbaukanal 4. Der Verbinder 13 ist hier in einer ersten Länge gezeigt, welche für eine Positionierung zwischen Kanalboden 2 und Oberteil 3a mit Einbaukanal 4 vorgesehen ist. Der Verbinder 13 greift in betriebsbereitem Zustand des Multifunktionskanals an seinem oberen Ende in eine Unterseite des Einbaukanals 4 im Oberteil 3a ein. Figur 8 ist eine Explosionszeichnung von Figur 1.

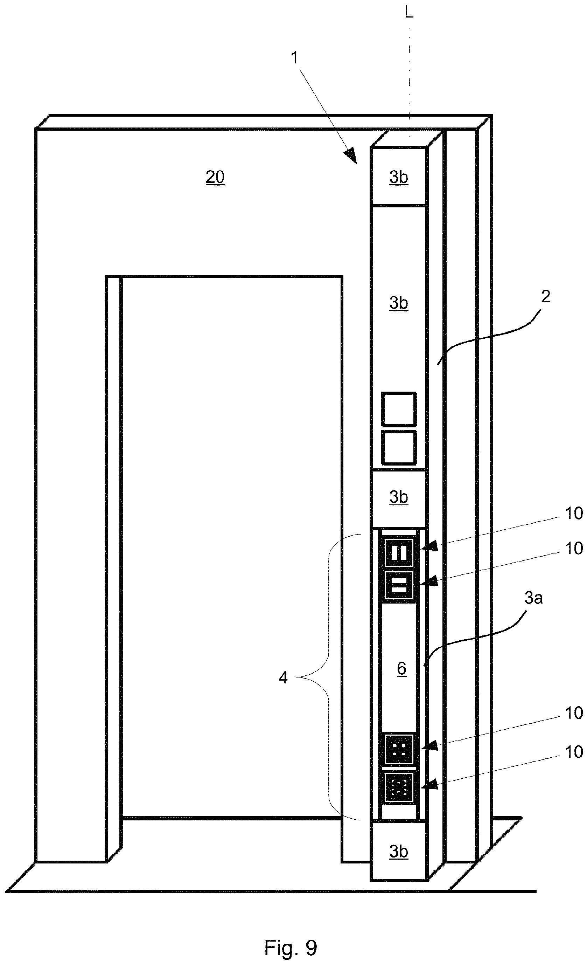

In Figur 9 ist eine perspektivische Ansicht eines Multifunktionskanals 1 in Betriebszustand gezeigt. Der Multifunktionskanal 1 ist mit seiner Längsachse L in vertikaler Richtung ausgerichtet und an einer Wand 20 befestigt. Der Multifunktionskanal 1 weist ein mehrteilig ausgebildetes Oberteil auf, welches einerseits ein Oberteile 3a mit Einbaukanal 4 umfasst, aber auch Oberteile 3b frei vom Einbaukanal 4 umfasst. Der Einbaukanal 4 ist hier grob gesagt im Bereich einer unteren Hälfte des Multifunktionskanals 1 angeordnet. Im Einbaukanal 4 sind an dessen Enden je zwei Installationskomponenten 10 angeordnet. Dazwischen ist der Einbaukanal 4 von der Abdeckung 6 abgedeckt. Die beiden oberen Installationskomponenten sind beispielsweise ein Lichtschalter und ein Storenschalter. Die beiden unteren Installationskomponenten umfassen beispielsweise eine Universelle Kommunikationsverkabelung (UKV) und Steckdosen. Im Oberteil 3b ohne Einbaukanal 4 ist oberhalb des Einbaukanals 4 (also in der oberen Hälfte des Multifunktionskanals 1) mit zwei Rechtecken dargestellt, dass beispielsweise ein Luftqualitätsfühler und ein Raumtemperaturfühler direkt im Oberteil 3b ohne Einbaukanal 4 angeordnet sein können.

Im Kanalboden 2 sind hier nicht ersichtliche Durchbrüche ausgebildet, welche es dem Multifunktionskanal 1 erlauben, mit Installationskomponenten auf einer Rückseite der Mauer 20 verbunden zu sein. Die Rückseite der Mauer 20 ist eine Seite der Mauer 20, welche der Seite entgegengesetzt ist, an welcher der Multifunktionskanal 1 befestigt ist. Beispielsweise sind auf der Rückseite der Mauer 20 Installationskomponenten mit Lichtschalter, Zutrittssystem, UKV und Steckdosen installiert (z.B. in Unterputzinstallation). Durch Maurerdurchbrüche und die Durchbrüche im Kanalboden 2 können die Installationskomponenten 10 im Multifunktionskanal 1 mit denjenigen auf der Rückseite der Mauer 20 interagieren. Ein Multifunktionskanal 1 reicht also für beide Seiten der Mauer 20. Auf diese Weise kann der entsprechende Installationsaufwand geringgehalten werden.

## Patentansprüche

1. Multifunktionskanal (1) für Haustechnik, umfassend einen Kanalboden (2) und ein Oberteil (3a,3b), wobei der Kanalboden (2) für eine Befestigung einer Installationskomponente (10) ausgebildet ist, welche in einem Betriebszustand des Multifunktionskanals (1) vom am Kanalboden (2) befestigten Oberteil (3a,3b) verdeckt ist,
**dadurch gekennzeichnet, dass**
das Oberteil (3a) mindestens in einem Teilbereich des Multifunktionskanals (1) einen Einbaukanal (4) umfasst, wobei der Einbaukanal (4) für eine Befestigung einer von ausserhalb des Multifunktionskanals (1) zugänglichen Installationskomponente (10) ausgebildet ist, und wobei der Einbaukanal (4) vom Oberteil (3a) in den Multifunktionskanal (1) hineinragend ausgebildet ist.

2. Multifunktionskanal (1) gemäss Anspruch 1, **dadurch gekennzeichnet, dass** der Kanalboden (2) eine Geräteschiene (11,12) umfasst.

3. Multifunktionskanal (1) gemäss Anspruch 1 oder 2, **dadurch gekennzeichnet, dass** der Einbaukanal (4) im Oberteil (3a) eine Geräteschiene (11,12) umfasst.

4. Multifunktionskanal (1) gemäss einem der Ansprüche 1 bis 3, **dadurch gekennzeichnet, dass** der Einbaukanal (4) im Teilbereich des Multifunktionskanals (1) entlang einer Längsachse (L) des Multifunktionskanals (1) verläuft.

5. Multifunktionskanal (1) gemäss einem der Ansprüche 1 bis 4, **dadurch gekennzeichnet, dass** der Multifunktionskanal (1) eine vom Kanalboden (2) und vom Oberteil (3a,3b) separat ausgebildete Einbauschiene (5) umfasst, welche am Kanalboden (2) und insbesondere an der Geräteschiene (11,12) am Kanalboden (2) befestigt werden kann.

6. Multifunktionskanal (1) gemäss Anspruch 5, **dadurch gekennzeichnet, dass** die Einbauschiene (5) eine Geräteschiene (11,12) umfasst.

7. Multifunktionskanal (1) gemäss einem der Ansprüche 1 bis 6, **dadurch gekennzeichnet, dass** der Multifunktionskanal (1) einen vom Kanalboden (2) und vom Oberteil (3a,3b) separat ausgebildeten Verbinder (13) umfasst, welcher in Betriebszustand des Multifunktionskanals (1) jeweils kontaktschlüssig und zwischen Kanalboden (2) und Oberteil (3a,3b) angeordnet ist.

8. Multifunktionskanal (1) gemäss Anspruch 7, **dadurch gekennzeichnet, dass** der Verbinder (13) für zwei verschieden Längen konfigurierbar ausgebildet ist, nämlich für eine erste Länge, um zwischen Kanalboden (2) und Oberteil (3a,3b) mit Einbaukanal (4) positioniert zu werden, und eine zweite Länge, um zwischen Kanalboden (2) und Oberteil (3a,3b) ohne Einbaukanal (4) positioniert zu werden.

9. Multifunktionskanal (1) gemäss einem der Ansprüche 1 bis 8, **dadurch gekennzeichnet, dass** der Einbaukanal (4) in Betriebszustand des Multifunktionskanals (1) mindestens in eine Tiefe von 50% der Tiefe des Multifunktionskanal (1) hineinragt.

10. Multifunktionskanal (1) gemäss einem der Ansprüche 1 bis 9, **dadurch gekennzeichnet, dass** der Kanalboden (2) auf einer der Bedienungsseite des Multifunktionskanals (1) entgegengesetzten Seite für einen Durchbruch vorgesehen ausgebildet ist.
